Europäisches Patentamt

European Patent Office

Office européen des brevets

(19)

(11) Numéro de publication : **0 112 241 B1**

(45) Date de publication du fascicule du brevet :
01.10.86

(51) Int. Cl.⁴ : **A 23 J   1/20, A 23 C   9/144**

(21) Numéro de dépôt : 83402356.6

(22) Date de dépôt : 06.12.83

(54) **Installation et procédé de préparation de caséinates acides.**

(30) Priorité : 15.12.82 FR 8221035

(43) Date de publication de la demande :
27.06.84 Bulletin 84/26

(45) Mention de la délivrance du brevet :
01.10.86 Bulletin 86/40

(84) Etats contractants désignés :
**AT BE CH DE FR GB IT LI LU NL SE**

(56) Documents cités :
**FR-A- 2 418 627
FR-A- 2 514 615
FSTA, vol. 47, no. 7, 1981, pages 220-223, T. FRIIS:
"Production of Mozzarella cheese based on ultrafiltration"**

(73) Titulaire : **PILLET S.A.R.L.
100 Avenue J.F. Kennedy
F-33700 Merignac (FR)**

(72) Inventeur : **Bolzer, Réné Jean-Marie
La Croix-Rouge
F-35530 Brece (FR)**

(74) Mandataire : **Bourgognon, Jean-Marie et al
Cabinet Flechner 22, Avenue de Friedland
F-75008 Paris (FR)**

Jouve, 18, rue St-Denis, 75001 Paris, France

## Description

La présente invention est relative aux installations et procédés de préparation de caséinates acides à partir du lait.

Quand on ajoute à du lait de l'acide en une quantité suffisante pour amener le pH à 4,6 environ, on atteint le point isoélectrique où la caséine coagule et se sépare du lactosérum.

L'invention propose un procédé et une installation de préparation d'un caséinate acide, dont le pH est bien inférieur à 4,6 et qui, sans être un liquide homogène comme le serait du lait n'ayant pas coagulé, reste, bien qu'ayant subi une coagulation déstructurant les micelles de caséine native, une solution colloïdale, dans laquelle de fines micelles de caséine sont en suspension dans le lactosérum, cependant suffisamment liquide et homogène pour permettre ensuite d'effectuer les traitements requis et, notamment, la fabrication de la caséine d'une manière simple et efficace, sans que jamais, au cours de l'ensemble du processus établi de transformation du lait en caséine, il ne soit nécessaire de refroidir du lait à basse température, avec les frais considérables qui accompagnent ce refroidissement. En outre, l'installation suivant l'invention peut fonctionner facilement, en continu à l'échelle industrielle sans régénération ni séparation de billes de résine d'ailleurs interdites par la législation en matière de produits alimentaires dans certains pays, ce qui permet d'éviter le mouillage du lait inévitable sur une installation à résine et d'obtenir des produits lactés nouveaux.

L'invention met en œuvre un procédé qui consiste à porter une quantité de liquide miscible à l'eau, servant de volant de pH, à un pH inférieur à 3,5 environ, puis à ajouter à ce volant de pH une quantité de lait telle que le pH de l'ensemble des deux quantités réunies reste inférieur à 3,5 environ.

On a en effet constaté que, dans ces conditions, le lait, ajouté au volant de pH, diffuse rapidement dans celui-ci et prend rapidement un pH inférieur à 3,5 en sorte que la coagulation qui se produit ne donne pas naissance à des agrégats importants mais à des micelles suffisamment fines pour repasser en solution colloïdale comme ce serait le cas si le pH ne devenait rapidement très inférieur au point isoélectrique. On dispose ainsi d'un liquide suffisamment homogène pour le transporter sans difficulté vers d'autres stades de traitement.

L'invention vise donc un procédé de préparation d'un caséinate acide ayant un pH inférieur à 3,5 environ, caractérisé en ce qu'il consiste à faire circuler du caséinate acide ayant un pH inférieur à 3,5 dans un circuit fermé comprenant successivement un récipient, un conduit allant de la sortie du récipient à l'entrée d'un électrodialyseur, l'électrodialyseur et un conduit allant de la sortie de l'électrodialyseur à l'entrée du récipient, à prélever une fraction du caséinate acide dans la partie du circuit allant de la sortie de l'électrodialyseur à la sortie du récipient et à alimenter le circuit en lait dans la partie du circuit allant de l'entrée du récipient à l'entrée de l'électrodialyseur.

L'invention vise également une installation qui comprend une cuve ayant deux conduits d'entrée et un conduit de sortie opposé à l'un des conduits d'entrée, un électrodialyseur à membrane cationique communiquant avec la cuve par les deux conduits opposés et un dispositif monté sur le conduit d'entrée opposé pour dériver vers un conduit d'évacuation une partie du liquide qui y passe. Par l'expression opposée, on entend que le liquide doit traverser au moins une partie de la cuve pour passer d'un conduit à l'autre. L'installation comprend un dispositif d'ultrafiltration sur le conduit de sortie de la saumure de l'électrodialyseur et le conduit de sortie du rétentat du dispositif d'ultrafiltration débouche dans la cuve du volant de pH ou dans le conduit ou bac y menant. On récupère ainsi les pertes de protéines qui peuvent se produire dans l'électrodialyseur.

De préférence, le volant de pH dans la cuve a un pH inférieur à 2,5 environ. On fait en sorte que le pH de l'ensemble des deux quantités réunies dans la cuve soit inférieur à 3,5 environ pour rester à distance de la limite inférieure du domaine de pH allant de 4 à 5 environ où la coagulation se produit d'une manière intense à la température ambiante à laquelle peut fonctionner l'installation suivant l'invention. La quantité de lait ajoutée dans la cuve dépend de la quantité de liquide miscible servant de volant de pH et du pH de cette quantité de liquide miscible. Comme liquide miscible à l'eau servant de volant initial de pH, on peut faire appel notamment à du lait acide, à du caséinate acide ou à une autre matière lactée acide et même, initialement, à de l'eau.

On soutire en continu de la cuve une quantité sensiblement égale à la somme de la quantité de lait ajoutée et à la quantité de matière acide ajoutée.

De préférence, les débits d'addition à la cuve et de soutirage à la sortie de l'électrodialyseur sont sensiblement identiques de tels que, compte tenu de la quantité de liquide servant de volant de pH, le temps de séjour moyen de la quantité de lait avec la quantité de liquide dans la cuve servant de volant de pH soit compris entre 10 minutes et 60 minutes environ.

Le débit de recirculation du lait à la sortie de l'électrodialyseur vers le volant dans la cuve est réglé de façon à ce que le pH de ce volant reste inférieur de préférence à 2,5.

Suivant une variante, on alimente la cuve en lait préacidulé ou en lait ultrafiltré, ou en rétentat de lait ultrafiltré ou en lait concentré avec un facteur de concentration allant jusqu'à 4 de manière à diminuer les volumes de traitement et à augmenter le rendement de l'installation.

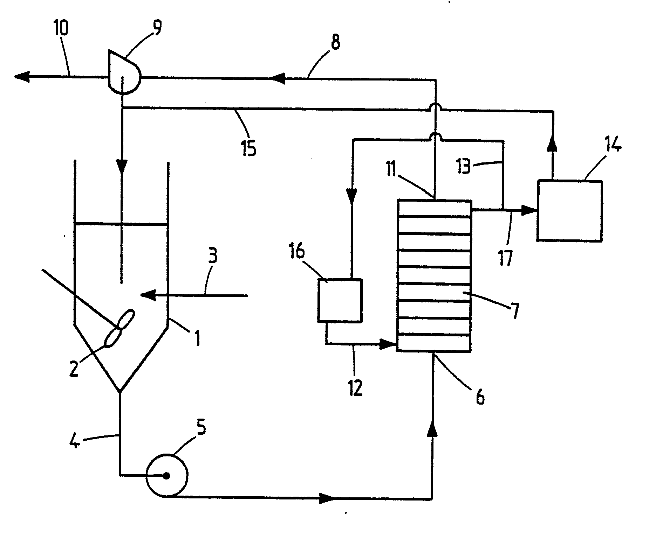

La figure unique du dessin annexé illustre cette installation.

De la cuve 1 à fond conique, munie d'un agitateur 2 vers le bas, débouchent, à mi-hauteur, un conduit 3 pour l'amenée de lait frais et, du bas, un conduit 4 de sortie menant par une pompe 5 à une entrée 6 d'un électrodialyseur 7 à membrane cationique. L'électrodialyseur est parcouru par deux circuits. L'un a son entrée en 6 et une sortie en 11 et est destiné au passage du lait. L'autre a une entrée en 12 et une sortie 13 et est destiné au passage de la saumure qui est retournée à une source 16 de saumure.

Au sommet de la cuve 1 débouche un conduit 8 provenant de la sortie de l'électrodialyseur 7. Sur le conduit 8 est monté un dispositif 9 permettant de dériver une partie du liquide qui y passe dans un conduit 10 d'évacuation allant à la fabrication de la caséine ou autres produits laitiers.

Le caséinate acide contenu dans la cuve 1 sert de volant de pH. Le lait frais arrivant par le conduit 3 dans la cuve 1 se transforme en caséine acide et prend un pH de 3,4. L'ensemble du caséinate acide est envoyé sur l'électrodialyseur 7 par le conduit 4 et par la pompe 5. Il en ressort par le conduit 8 en ayant un pH de 1,8 à 2,4. Une partie de ce caséinate très acide sert à maintenir le pH dans la cuve 1, tandis que l'autre partie va à la fabrication par le conduit 10.

En aval de la sortie 13 est monté un conduit 17 d'alimentation temporaire d'un dispositif 14 d'ultrafiltration dont le conduit de sortie 15 du rétentat débouche dans le circuit du lait, par exemple en amont ou en aval du dispositif 9 ou même directement dans la cuve 1 ou, le cas échéant, dans le conduit 3.

L'exemple suivant illustre l'invention :

On dispose, dans l'illustration de la figure, d'une cuve à fond conique munie d'un agitateur disperseur et d'un pH mètre, dans laquelle on a introduit 10 m³ de lait écrémé à 12 °C à pH de 2,5.

On met l'agitateur en route.

A aucun moment, dans les conditions de l'expérience, la réaction n'a fait apparaître de phénomène de coagulation.

On envoie 10 m³/h de lait écrémé à pH 6,7 par le conduit 3. On soutire 10 m³/h par le conduit 10. On retourne 25 m³/h par le conduit 8.

**Revendications**

1. Procédé de préparation d'un caséinate acide ayant un pH inférieur à 3,5 environ, caractérisé en ce qu'il consiste à faire circuler du caséinate acide ayant un pH inférieur à 3,5 dans un circuit fermé comprenant successivement un récipient, un conduit allant de la sortie du récipient à l'entrée d'un électrodialyseur, l'électrodialyseur et un conduit allant de la sortie de l'électrodialyseur à l'entrée du récipient, à prélever une fraction du caséinate acide dans la partie du circuit allant de la sortie de l'électrodialyseur à la sortie du récipient et à alimenter le circuit en lait dans la partie du circuit allant de l'entrée du récipient à l'entrée de l'électrodialyseur.

2. Procédé suivant la revendication 1, caractérisé en ce que le caséinate acide à la sortie de l'électrodialyseur a un pH inférieur à 2,5 environ.

3. Procédé suivant la revendication 1 ou 2, caractérisé en ce que les débits de recirculation à la sortie de l'électrodialyseur vers le récipient et d'addition de lait au récipient sont tels que le temps de séjour moyen du lait dans le récipient est de 10 minutes à 60 minutes.

4. Installation de préparation d'un caséinate acide qui comprend une cuve (1) ayant deux conduits d'entrée (3, 15) et un conduit de sortie (4) opposé à l'un des conduits d'entrée, un électrodialyseur (7) à membrane cationique communiquant avec la cuve (1) par les deux conduits opposés (4, 15), un dispositif (9) monté sur le conduit d'entrée (15) opposé pour dériver vers un conduit d'évacuation (10) une partie de liquide qui y passe et un dispositif d'ultrafiltration (14) monté sur le circuit pour la saumure de l'électrodialyseur (7) en aval de celui-ci, la sortie (14) du dispositif d'ultrafiltration débouchant dans le circuit d'alimentation de la cuve.

**Claims**

1. Process for preparing an acid caseinate having a pH of less than about 3.5, characterised in that it consists in circulating acid caseinate with a pH of less than 3.5 in a closed circuit comprising, successively, a container, a pipe going from the outlet from the container to the inlet to an electrodialysis machine, the electrodialysis machine and a pipe going from the outlet from the electrodialysis machine to the inlet to the container, taking off a fraction of the acid caseinate in the part of the circuit going from the outlet from the electrodialysis machine to the outlet from the container and supplying milk to that part of the circuit going from the inlet to the container to the inlet to the electrodialysis machine.

2. Process as claimed in claim 1, characterised in that the acid caseinate leaving the electrodialysis machine as a pH of less than about 2.5.

3. Process as claimed in claim 1 or 2, characterised in that the recycling flow rates at the outlet from the electrodialysis machine into the container and the rate of adding milk to the container are such that the average retention time of the milk in the container is from 10 minutes to 60 minutes.

4. Plant for preparing an acid caseinate, which comprises a tank (1) having two inlet pipes (3, 15) and an outlet pipe (4) opposite one of the inlet pipes, an electrodialysis machine (7) with a cationic membrane communicating with the tank (1) via the two opposing pipes (4, 15), a device (9) mounted on the opposite inlet pipe (15) in order to divert some of the liquid passing through into an evacuation pipe (10) and an ultrafiltration apparatus (14) mounted on the circuit for the brine from the electrodialysis machine (7) downstream thereof, the outlet (14) from the ultrafiltration apparatus opening into the supply circuit for the tank.

## Patentansprüche

1. Verfahren zur Herstellung eines sauren Kaseinats mit einem pH-Wert unter ungefähr 3.5, dadurch gekennzeichnet, daß es darin besteht, saures Kaseinat mit einem pH-Wert unter 3.5 in einem geschlossenen Kreislauf zirkulieren zu lassen, der in Aufeinanderfolge einen Behälter, eine vom Ausgang des Behälters zum Eingang eines Elektrodialysegerätes führende Leitung, dieses Gerät und eine vom Ausgang jenes Gerätes zum Eingang des Behälters führende Leitung aufweist ; eine Fraktion des sauren Kaseinats in denjenigen Teil des Kreislaufs abzuzweigen, welcher vom Ausgang des Elektrodialysegerätes zum Ausgang des Behälters führt ; und den Kreislauf in demjenigen Teil desselben mit Milch zu beschicken, welcher vom Eingang des Behälters zum Eingang des Elektrodialysegerätes führt.

2. Verfahren nach Anspruch 1, dadurch gekennzeichnet, daß das saure Kaseinat am Ausgang des Elektrodialysegerätes einen pH-Wert unter ungefähr 2.5 hat.

3. Verfahren nach Anspruch 1 oder 2, dadurch gekennzeichnet, daß die Durchsätze der Rezirkulation am Ausgang des Elektrodialysegerätes in Richtung Behälter beziehungsweise der Beschikkung des Behälters mit Milch so sind, daß die mittlere Verweilzeit der Milch im Behälter zehn bis sechzig Minuten beträgt.

4. Vorrichtung zur Herstellung eines sauren Kaseinats, mit einem Bottich (1), der zwei Zuleitungen (3, 8) und eine Ableitung (4) besitzt, die einer der beiden Zuleitungen gegenübersteht ; mit einem eine kationische Membran aufweisenden Elektrodialysegerät (7), das durch die zwei einander gegenüberstehenden Leitungen (4, 8) mit dem Bottich (1) in Verbindung steht ; mit einer in die entgegengesetzte Zuleitung (8) eingefügten Einrichtung (9) zum Ableiten eines Teiles der dort durchströmenden Flüssigkeit in eine Ablaufleitung (10) ; und mit einer in einen Kreislauf für Sole des Elektrodialysegerätes (7) stromabwärts desselben geschalteten Einrichtung (14) zur Ultrafiltration, deren Ausgang (14) in die Versorgungsleitung des Behälters einmündet.